(19) Europäisches Patentamt
European Patent Office
Office européen des brevets

(11) EP 0 678 108 B1

(12) **EUROPEAN PATENT SPECIFICATION**

(45) Date of publication and mention
of the grant of the patent:
**09.07.1997 Bulletin 1997/28**

(21) Application number: **94906545.2**

(22) Date of filing: **06.01.1994**

(51) Int Cl.⁶: **C08J 3/03**, C08J 5/18,
C08L 53/02, B29C 41/00,
B29C 71/02
// B29K9:06, B29K96:04,
B29L7:00

(86) International application number:
**PCT/US94/00229**

(87) International publication number:
**WO 94/15997 (21.07.1994 Gazette 1994/17)**

(54) **HIGH-STRENGTH FILMS OF BLOCK COPOLYMER LATICES**

FOLIEN MIT HOHER FESTIGKEIT AUS BLOCKCOPOLYMERLATICES

FILMS A HAUTE RESISTANCE CONSTITUES DE RESEAUX DE COPOLYMERES SEQUENCES

(84) Designated Contracting States:
**BE CH DE ES FR GB IT LI NL SE**

(30) Priority: **08.01.1993 US 2433**

(43) Date of publication of application:
**25.10.1995 Bulletin 1995/43**

(73) Proprietor: **THE DOW CHEMICAL COMPANY**
**Midland, Michigan 48640 (US)**

(72) Inventors:
• SPETH, David, R.
Midland, MI 48640-2821 (US)
• PELLETIER, Ronald, R.
Midland, MI 48642 (US)
• WALTHER, Brian, W.
Baton Rouge, LA 70810 (US)

(74) Representative: **Raynor, John**
**W.H. Beck, Greener & Co**
**7 Stone Buildings**
**Lincoln's Inn**
**London WC2A 3SZ (GB)**

(56) References cited:
**EP-A- 0 058 952          EP-A- 0 171 225**
**EP-A- 0 478 089          DE-A- 2 015 249**
**US-A- 3 360 599**

• DATABASE WPI Week 7729, Derwent
Publications Ltd., London, GB; AN 77-51183Y &
JP,A,52 068 249 (ELECTRO CHEM IND) 6 June
1977
• DATABASE WPI Week 7729, Derwent
Publications Ltd., London, GB; AN 77-51183Y &
JP,A,52 068 249

**Description**

The present invention relates to high-strength films prepared from aqueous dispersions of block copolymers of vinyl aromatic monomers and conjugated dienes.

Block copolymers of the conventional A-B-A type form strong films when cast from solutions in organic solvents. The use of aqueous dispersions or latices to form films or articles of intricate design is preferred to the use of casting from solutions because no objectionable fumes are released during the drying step. However, films of comparable thickness prepared by casting from their aqueous dispersions or latices are generally weak. To improve the strength of such films, U.S. Patent 3,360,599 taught the use of an annealing procedure. Disadvantageously, this annealing procedure requires elevated temperatures and/or long annealing times. As a consequence, the resulting films often have inferior strength properties, due to polymer degradation, and/or the time required for film formation is unacceptably long. U.S. Patent 4,199,490 taught the addition of a second aqueous dispersion comprising a rubber, synthetic resin or a mixture thereof to enable the formation of films upon drying at room temperature. In the absence of such additive, the block copolymer dispersion did not possess adequate film forming properties at moderate or low temperatures. In U.S. Patent 3,238,173, there was disclosed the preparation of concentrated aqueous dispersions by contacting the dilute latex with an aliphatic hydrocarbon that is a non-solvent for the non-elastomeric block, removing the hydrocarbon and concentrating the latex. The use of such non-solvents is undesirable, due to the added complexity of the process and the presence of residual organic contaminants in the resulting films.

Accordingly, there remains a need to provide films prepared from aqueous dispersions of block copolymers having improved strength properties. In addition, it would be desirable to provide a process capable of preparing strong films from aqueous latices of block copolymers that uses relatively short times and mild temperature conditions for the annealing step to thereby avoid significant polymer degradation. Finally, it would be desirable to provide a process for the preparation of thin elastomeric articles by film deposition from a block copolymer latex that avoids the use of additives.

Accordingly, the present invention comprises an aqueous dispersion which is capable of forming a coherent, elastomeric, solid film which, after drying and annealing at 80°C for 30 minutes, demonstrates a tensile strength at break of about 11.0 MPa or greater wherein the dispersion comprises

(a) one or more block copolymer(s) corresponding to one of the formulas

$$A\text{-}B\text{-}X_m\text{-}(B\text{-}A)_n \text{ or } ABA$$

wherein each A is a polymer block consisting essentially of a monovinylidene aromatic monomer and, optionally, a conjugated diene, each B is a polymer block consisting essentially of a conjugated diene, X is the remnant of a multifunctional coupling agent, m is 0 or 1; and n is an integer from 1 to 5, each monovinylidene aromatic monomer block having a weight average molecular weight from 8,000 to 15,000 Daltons, each conjugated diene block having a weight average molecular weight from 40,000 to 240,000, preferably from 50,000 to 200,000 Daltons,
(b) water,
(c) optionally, a diluent for the block copolymer which is soluble in the B block or forms a single phase with the B block when the diluent is mixed with one or more block copolymers,
(d) a surfactant in sufficient amount to emulsify (a) and (c) in water and such that a film formed from the emulsion exhibits the required properties,

wherein the average A content of the hydrocarbon phase is from 5 to 25 percent by weight and the A block effective phase volume in the hydrocarbon phase is from 10 to 19 percent wherein the amount of diluent present is sufficient to achieve the desired effective phase volume of the A block and the required film properties and is at least 1 percent by weight of the hydrocarbon phase.

In one preferred embodiment, the present invention comprises an aqueous dispersion of a block copolymer, a process for preparing a coherent, elastomeric film from such aqueous dispersions, and the resulting films.

In another embodiment, the invention comprises a high-strength film comprising the block copolymer described above, optionally, the diluent described hereinbefore and a residual amount of the surfactant described hereinbefore, wherein the film exhibits a tensile strength at break of about 11.0 MPa or greater after annealing at 80°C for 30 minutes.

In yet another embodiment, the invention comprises a process for preparing a film which comprises (1) forming an aqueous dispersion from the block copolymer, water, diluent and surfactant as described hereinbefore, (2) depositing a coating of the aqueous dispersion to form a film, and (3) annealing the film under conditions such that the film exhibits tensile strength at break of about 11.0 MPa or greater after annealing at 80°C for 30 minutes. The invention also comprises films prepared by the process described.

Surprisingly, such block copolymers readily form thin films by deposition onto solid surfaces from an aqueous dispersion. Such films may be dried to form coherent, elastomeric, solid film articles having high annealed strength properties using short annealing times and mild annealing temperatures. Examples of such articles include surgical gioves, examination gloves, condoms, catheters, balloons and other thin elastomeric articles. If a tackifier and optionally other formulants known to one skilled in the art are combined with the block copolymer, films having adhesive properties may also be prepared. Such films may be deposited onto a thin, flexible substrate for use as pressure sensitive tapes, packaging tapes, masking tapes and labels.

It has been discovered that by careful selection of the block copolymer and the total volume of the polystyrene phase, stable aqueous emulsions can be prepared which form strong films. In selecting appropriate block copolymers, the weight average molecular weight of the monovinylidene aromatic monomer block must be within the limits defined herein. If the chain length is too high, the annealing time required to form a high-strength film becomes unacceptably long. If the end block length is too low, the films prepared do not exhibit acceptable tensile strengths. The total volume of the monovinylidene aromatic monomer (block A) phase is important in that if the volume of the monovinylidene aromatic monomer phase is too high, stable emulsions cannot be formed using a relatively low amount of surfactants. If the A block phase volume is too low, the films prepared from the block copolymers will not exhibit the required tensile strengths.

Both linear and radial block copolymers are suitably employed in the invention. Most preferably, however, the block copolymers are triblock copolymers, that is, n in formula (I) is equal to 1.

The block copolymers may be partially tapered, fully tapered or untapered polymers. By the term "tapered" is meant that the B block changes gradually from diene rich or pure diene homopolymer in the center to include increasing proportions of monovinylidene aromatic monomer in a gradual conversion towards the junction of the monovinylidene aromatic block of the block copolymer and terminates in pure homopolymer of the monovinylidene aromatic monomer (the A block). The conversion may be symmetrical or unsymmetrical with respect to the center of the B block. Triblock copolymers possessing taperness at only one junction are referred to as "half-tapered" polymers.

Preferable monovinylidene aromatic monomers for use herein include styrene and alkyl substituted derivatives of styrene. Examples include styrene, $\alpha$-methylstyrene, and vinyl toluene. A more preferred monovinylidene aromatic monomer is styrene. Conjugated dienes suitably employed in the present invention include 1,3-butadiene, isoprene or mixtures thereof. Preferably, the conjugated diene is isoprene. Preferably, the amount of monovinylidene aromatic monomer in the hydrocarbon phase is from 10 percent to 20 percent by weight. Preferably, the monovinylidene aromatic monomer block has a weignt average molecular weight from 8,000 to 15,000 Daltons, and the conjugated diene block has a weight average molecular weight from 50,000 to 120,000 Daltons. In the embodiment where the block copolymer is in radial form, the diene blocks' weight average molecular weight can range from 50,000 to 240,000 Daltons. Preferably, the monovinylidene aromatic polymer block has an effective phase volume from 12 to 18.5 percent, more preferably 12-18 percent, of the hydrocarbon phase.

A blend of two or more block copolymers may be used in this invention. All of the block copolymers used preferably have A blocks which have weight average molecular weights in the range of from 8,000 to 15,000. The composition weighted average styrene content of the blended copolymers is preferably from 5 to 25 percent by weight. One or more of the components may have a styrene content outside of the stated range, provided the average is within the stated range. In the embodiment wherein one of the block copolymers in such a blend has a styrene content above 25 weight percent, it is preferred that the styrene content be about 35 weight percent or less and, more preferably, about 30 weight percent or less. Preferably, the total amount of block copolymer having a styrene content above about 25 percent by weight is about 35 percent by weight or less and, more preferably, about 30 percent by weight or less. The block copolymers can be blended in bulk and thereafter emulsified. Optionally, the block copolymers may be emulsified separately and the emulsions can be blended. Methods of blending the bulk block copolymers or aqueous emulsions of the block copolymers are well-known in the art.

In some embodiments of the invention, the one or more block copolymers may have an effective phase volume of the A block which is greater than desired. In order to reduce the phase volume of the A block, a diluent may be blended with the block copolymer to reduce the effective phase volume of the A block in the hydrocarbon phase to the required or desired level. Diluents useful in the invention are materials which are compatible with the B block, that is, such diluents are soluble in the B block or form a single phase with the B block when the diluent is mixed with one or more block copolymers. Further, useful diluents do not degrade the properties of the films prepared from the aqueous emulsions of the invention such that the tensile strengths at break are less than 11.0 MPa when the films are annealed at 80°C for 30 minutes. Among preferred diluents are hydrocarbon oils, naphthenic oils, polymers or oligomers derived from monomers having olefinic unsaturation compatible with the B block, or mixtures thereof. More preferred diluents are the hydrocarbon and naphthenic oils with the most preferred class of diluents being the hydrocarbon oils. The preferred hydrocarbon and naphthenic oils are selected according to the ultimate end use and the cost of such oils. Among preferred oils are Tufflo™ 6056 mineral oil (trademark of Atlantic Richfield Company) and Shellflex™ 371 mineral oil (trademark of Shell Oil Company). The preferred polymers useful as diluents include polyisoprene, polybutadiene, polyethylene vinyl acetate, polyethylene methacrylate, ethylene-propylene diene monomer based polymers, styrene butadiene random copolymers and ethylene-styrene copolymers. Most preferred polymers include polyisoprene and polybutadiene. The diluents are present in sufficient amount to achieve the desired effective phase volume of the A block. If too much diluent is used, the films prepared from the aqueous emulsions would not meet the tensile strengths required. The amount of diluent is preferably about 45 percent by weight or less of the hydrocarbon phase, more preferably, about 40 percent by weight or less and, even more preferably, about 20 percent by weight or less. If present, the diluent is present in an amount of about 1 percent by weight or greater of the hydrocarbon phase.

The diluent can be blended with the block copolymer in bulk and the blend can be emulsified. Alternatively, the diluents and block copolymers can be separately emulsified and the emulsions can be blended to achieve the desired hydrocarbon phase composition. In yet another embodiment, the diluent may be added directly to an emulsion of the block copolymers. Methods of performing such blending are well-known in the art.

To achieve the required hydrocarbon phase composition, a blend of two or more copolymers and one or more diluents may be used in combination.

Effective phase volume or volume percent of the monovinylidene aromatic monomer blocks may be less than the weight percent of monovinylidene aromatic monomers in such copolymers. Especially if one or more of the polymers is tapered, the monovinylidene aromatic monomer blocks are more compatible and therefore more soluble in the diene polymer phase of the resulting multiple phase structure compared to pure monovinylidene aromatic homopolymer blocks. Due to such solubility, the volume of the phase segregated monovinylidene aromatic polymer is less than the content of such monovinyl idene aromatic monomer expressed by weight. Accordingly, the percentage of the monovinylidene aromatic monomer block in the block copolymer or hydrocarbon phase, measured as a voiume percent, is less than the percentage thereof measured by weight. In order to determine the volume percent of the monovinylidene aromatic polymer block, the corresponding weight percentage of monovinylidene aromatic monomer is divided by a correction factor. The correction factor is a value equal to the sum of ratios of each monomer's content in weight percent divided by the respective density of a homopolymer of such monomer. For a two component block copolymer, this may be expressed as follows:

$$(II) \ \%(vol_a) = \%(wt_a)/D_a \ /(\%(wt_a)/D_a + \%(wt_b)/D_b)$$

where:

$\%(vol_a)$ is the effective phase volume in percent for the monovinylidene aromatic polymer block;

$\%(wt_a)$ and $\%(wt_b)$ are the respective weight percent contents of monovinylidene aromatic monomer and diene monomer in the block copolymer; and

$D_a$ and $D_b$ are the respective densities of homopolymers, the monovinylidene aromatic monomer and diene monomer.

In those embodiments where a diluent is present, the effective phase volume of the A block in the hydrocarDon phase is represented by formula III

$$(III) \ \%(vol_a) = \%(wt_a)/D_a/(\%(wt_a)/D_a + \%(wt_b)/D_b + \%(wt_d)/D_d)$$

where:

$\%(wt_d)$ is the weight percent diluent present, and
$D_d$ is the density of the diluent present.

For tapered block copolymers, the above numerator is further multiplied by a correction factor equal to $1-\tau$ (where $\tau$ is the degree of taperness) to account for the isolated monovinylidene aromatic polymer content. The degree of taperness in the block copolymer is the percentage of total monovinylidene aromatic polymer units that are isolated. Such isolated monovinylidene aromatic polymer units are those segments of monovinylidene aromatic polymer surrounded on both sides by conjugated diene polymer units and are easily determined by the use of nuclear magnetic resonance spectroscopy as disclosed in Mochel, Rubber Chemistry and Technology, V 40, p. 1200 (1967). Because such isolated polymer units do not contribute significantly to the phase represented by the monovinylidene aromatic polymer block, tapered block copolymers possess an effective monovinylidene aromatic polymer phase volume that is significantly less than the weight percent monovinylidene aromatic monomer content.

At lower monovinylidene aromatic monomer effective phase volumes, especially for polymers wherein the monovinylidene aromatic monomer block molecular weight is relatively low, the tensile properties of the resulting films are unacceptably low. At higher monovinylidene aromatic monomer effective phase volumes, the dispersion does not readily form films, especially at mild temperatures from 25°C to 90°C. Moreover, films from such polymers require longer periods of time under annealing conditions and/or higher annealing temperatures to achieve maximum tensile strength properties. Such films are subject to polymer degradation resulting in films possessing poor tensile properties, especially ulti mate tensile strength.

Suitably, the weight average molecular weight ($M_w$) of the block copolymers is from 60,000 to 240,000 Daltons, more particularly, from 65,000 to 200,000 Daltons and, most preferably, from 70,000 to 200,000 Daltons. In the embodiment where the block copolymer is a radial block copolymer, the weight average molecular weight is preferably about 300,000 or less. In measuring the molecular weights of copolymers herein, the technique employed is that of gel permeation chromatography (GPC) using polystyrene standards.

Further preferably, the B block of the block copolymers employed herein comprises a high 1,4-content polymer of a conjugated diene. By this is meant that the 3,4-vinyl functionality (or 1,2-vinyl functionality in the case of butadiene) of the resulting conjugated diene polymer block is preferably below about 10 weight percent for blocks not containing butadiene or, in the case of blocks comprising butadiene, preferably below about 25 weight percent.

It is believed (but not agreeing to be bound by such belief) that when the monovinylidene aromatic polymer blocks possess the previously stated effective phase volume, the monovinylidene aromatic polymer blocks coalesce, thereby causing the polymer matrix to possess a particulated or spherical morphology instead of a cylindrical or lamellar morphology. Such morphology is desirable for the formation of films from latexes having good strength properties and film formation rates. Such morphology as well as the concept of polymer block phase volume, are disclosed in S. L. Aggarwal, Block Polymers, Plenum Press, p. 102-103, (1970). It is further believed (but not agreeing to be bound by such belief) that the particulated or spherical morphology which is present in the A block is the discontinuous phase which facilitates the formation of stable emulsions and strong films.

Block copolymers and techniques for their preparation are well-known in the art. Such polymers may be prepared by sequential anionic polymerization utilizing alkyllithium initiators, such as n-butyllithium and sec-butyllithium. They may also be prepared by coupling of living block copolymers or by using soluble difunctional lithium initiators such as 1,3-phenylene-bis(3-methyl-1-phenylpentylidene)-bis-(lithium), or similar initiator as disclosed in U.S. Patent 4,196,154. The block copolymers may be tapered or untapered. That is, the junction between the separate blocks may be gradual or abrupt. Untapered block copolymers may be formed by completely polymerizing each monomer component before adding the next block forming monomer to the reaction medium containing the living polymer anion. Tapered block copolymers may be formed by copolymerizing a mixture of the monomers using the previously mentioned difunctional initiators. Due to the differing reactivities of the monomers, a relatively pure diene block initially forms, followed by an intermediate portion of such polymer containing increasing amounts of interspersed monovinylidene aromatic polymer, and finally a relatively pure monovinylidene aromatic polymer block.

After polymerization according to one of the foregoing anionic polymerization techniques, the living polymer anion is terminated by addition of a terminating agent containing a reactive hydrogen, or coupled by a coupling agent containing multiple leaving groups. Suitable terminating agents include water, alcohols and carboxylic acids. Suitable coupling agents include ethylene dibromide, methylene chloride, carbon tetrachloride, silicon tetrachloride, and dichlorodimethylsilane. Additional additives can be added to the reaction mixture before or after the polymerization is completed for purposes of stabi l izi ng the polymer, preventing discoloration or for any other suitable purpose. The polymerization is normally conducted in an organic solvent such as hexane, toluene, cyclohexane, benzene or a mixture thereof.

Surfactants useful in the invention are those which emulsify the block copolymer(s) and optional diluent in water. Anionic, cationic and nonionic surfactants may be used, with the anionic and cationic surfactants being preferred. Even more preferred surfactants are the $C_{12-30}$ saturated and unsaturated carboxylic acids or salts thereof, sulfated alkylphenoxypoly(ethyleneoxy)ethanol alkali or ammonium salts and dialkyl esters of alkali metal sulfosuccinic acid (for example Aerosol™ OT dioctyl ester of sodium sulfosuccinic acid, available from American Cyanamid). Even more preferred are the $C_{12}$-$_{30}$ saturated and unsaturated carboxyl ic acids or salts thereof. Preferred counterions are the alkali metals and ammonium ions. Among the most preferred surfactants are stearic acid, linoleic acid, linolenic acid, lauric acid, oleic acid (for example, Industrene™ 105 oleic acid, available from Humko Chemical), alkali metal salts of disproportionated rosin (for example, Dresenate™ 214 potassium salt of disproportionated rosin, predominantly abietic acid). Preferably, the surfactants have an HLB of about 15 or greater and, more preferably, an HLB of about 18 or greater.

The surfactant is present in a sufficient amount to emulsify the block copolymer(s) and optional diluent. If too much surfactant is used to prepare the aqueous emulsions, films prepared from the aqueous emulsions will not demonstrate the desired tensile properties. The reason is that a significant amount of the surfactant will remain in the film which is formed from the aqueous emulsion. The maximum amount of surfactant useful is related to how much surfactant is retained in the film. More than this amount may be used if the excess portion is removed prior to film formation or can be leached from the film prior to annealing. Preferably, about 0.5 percent by weight or more of surfactant is present and, more preferably, 1 percent by weight or more is present and, even more preferably, about 2 percent by weight or more is present. Preferably, about 10 percent by weight or less surfactant is used, more preferably, about 8 percent by weight is used and, even more preferably, about 6 percent by weight or less is used. Where a portion of the surfactant is removed prior to film formation, up to about 20 percent by weight may be used, provided no more than about 10 percent by weight is present in the final film.

To produce an aqueous dispersion (interchangeably referred to herein as an emulsion or a latex) the polymer, usually in the form of a solution in an organic solvent, is dispersed in water using a suitable surfactant and the organic solvent is removed. One suitable procedure is previously disclosed in U.S. Patent 3,238,173. Emulsification can take place by any of the well-known means for this purpose and the specific means utilized does not form an essential aspect of the present invention. In one embodiment, the block copolymer and optional diluent are dissolved in an organic solvent. In such embodiment, a portion of the solvent is removed until the solids level is preferably about 30 percent by weight or greater and, more preferably, about 40 percent by weight or greater. Preferably, the solids content is about 50 percent by weight or less. Thereafter, the block copolymer and optional diluent are contacted with water and surfactant with agitation to emulsify the mixture. Thereafter, the remaining solvent is removed by conventional means, such as rotary evaporation or vacuum distillation Preferably, the solids level is about 20 percent by weight or greater and more preferably, about 28 percent by weight or greater. Preferably, the solids level is about 75 percent by weight or less, more preferably, about 65 percent by weight or less. Generally, the number average size of the resulting latex particles is less than about 5.0 μm, more preferably from 0.3 to 2.0 μm. Preferably, the latex particles (the dispersed polymer particles in the aqueous medium) are spherical in shape.

To prepare a film from the latex, a suitable form having a surface in the shape of the desired resulting product (optionally having a surface coating of a suitable substance to promote film removal and/or latex deposition as previously known in the art) is coated with the latex and the water thereafter removed by evaporation. A preferred latex for use in the manufacture of dipped goods in the foregoing manner contains from 20 to 70 weight percent polymer, more preferably from 25 to 60 weight percent. A second or further layer may be applied in the same manner to achieve thicker films. The film resulting from the foregoing procedure may be dried and annealed, if desired, by any suitable technique, especially by heating. Preferable temperatures for drying and annealing are from 25°C to 130°C, more preferably, from 30°C to 120°C and, most preferably, from 50°C to 90°C. Suitable times for drying and annealing are from 1 minute to 10 hours, preferably from 1 minute to 60 minutes. At higher temperatures, shorter drying and annealing times are required. The drying and annealing steps of the process may be conducted simultaneously or separately. For example, multiple film layers may be deposited and dried before the resulting structure is annealed.

The film thickness is determined by the ultimate use. The desired film thickness for the uses for which the films of the invention may be used are well-known in the art. Preferably, the films have a thickness of about .13 mm or greater and, more preferably, about .20 mm or greater. Preferably, the films are about 3.0 mm or less and, most preferably, about .30 mm or less. The films of this invention preferably exhibit a tensile strength at break of about 11.0 MPa or greater after annealing at 80°C for about about 30 minutes. More preferably, the films exhibit a tensile strength of about 16.5 MPa or greater and, most preferably, about 22 MPa or greater when annealed under such conditions.

Films having adhesive properties may be prepared by incorporating a suitable tackifier, usually a low molecular weight organic polymer such as a polyterpene or similar compound, in the film. Additional formulants such as oils may also be added to modify the adhesive properties of the resulting film. The tackifiers and other formulants may be added to the polymer solution or incorporated into the latex. The resulting modified latex may be further concentrated and coated onto a substrate such as a masking tape backing. The substrate/film combination may thereafter be dried and optionally annealed to form the final product.

Having described the invention, the following examples are provided as further illustration and are not to be construed as limiting. Unless stated to the contrary, parts and percentages are expressed on a weight basis. Effective phase volumes were calculated using the previously disclosed formulae (II and III).

<u>Example 1</u> Films of Styrene/Isoprene/Styrene Block Copolymer

An aqueous dispersion was formed from a cyclohexane solution of a styrene/isoprene/styrene tri block copolymer having $M_w$ of 136,000 Daltons, and a styrene content of 14 weight percent and 12 volume percent (effective phase volume). The surfactant used was Alipal™ CO-436 sulfated nonylphenoxypoly(ethyleneoxy) ethanol at a 3 percent by weight level. Molecular weights were determined by gel permeation chromatography using polystyrene standards and corrected for diene content. The polystyrene endblocks had weight average molecular weights of 9,500 Daltons. The polyisoprene block $M_w$ was 115,000 Daltons The solvent was removed and the dispersion concentrated to 54 percent solids by weight. Two-layer films were prepared by coating glass slides with the latex, drying the films at room temperature to remove water and repeating the process. The films were separated from the support and cut into test specimens. The films were translucent and had a thickness of about 0.25 mm. Specimens were tested without annealing and after annealing at 80°C for the times identified in Table IA. Tensile strengths were evaluated according to ASTM-D-412-80. Samples were die-cut into dumbbell shapes having gauge length of 25 mm and a width of 3 mm. Cross-head speed was 50 cm per minute. Results are contained in Table IA.

Table IA

| Strength as a Function of Annealing Time | | | | |
|---|---|---|---|---|
| minutes | 0 | 2 | 8 | 16 |
| Tensile Strength at Break (MPa) | 0.9 | 16.9 | 20.2 | 20.3 |

Additional film samples were annealed at reduced temperatures. Results are contained in Table IB.

Table IB

| Strength as a Function of Annealing Temperature-Time | | | | | | | | |
|---|---|---|---|---|---|---|---|---|
| Temp.(°C) | 40 | 40 | 50 | 50 | 60 | 60 | 70 | 70 |
| Time (min.) | 4 | 16 | 4 | 16 | 4 | 16 | 4 | 16 |
| Tensile Strength at Break (MPa) | 1.9 | 3.7 | 4.1 | 9.9 | 7.8 | 18.1 | 17.2 | 18.8 |

As may be seen by reference to the results of Tables IA and IB, films having good tensile strength properties, as indicated by tensile strength at break values, can be formed according to the present invention without the use of additives such as additional copolymer latices or aliphatic solvents even at relatively low annealing temperatures from 40°C to 80°C.

Comparative A Films of Block Copolymer Having Relativeiy Long Polystyrene EndblocK Length

A dispersion was made from a styreneiisoprene/ styrene block copolymer having $M_w$ of 205,000 Daltons and having a styrene content of 15 weight percent and 13 volume percent. The polystyrene endblocks had molecular weights of 15,300 Daitons. The polyisoprene centerblock molecular weight was 174,000 Daltons. The dispersion used in making the films had a solids content of 54 weight percent. The films were annealed at 80°C for the times identified in Table II. Film formation and testing were according to the techniques of Example 1. Results are contained in Table II.

Table II

| Strength as a Function of Annealing Time | | | | |
|---|---|---|---|---|
| minutes | 0 | 16 | 60 | 120 | 240 |
| Tensile Strength at Break (MPa) | 0.2 | 1.6 | 5.4 | 8.5 | 9.4 |

Compared to the results of Table I, it may be seen that block copolymers having longer endblock vinyl aromatic polymer length require longer annealing times and/or higher annealing temperatures to achieve maximum tensile strengths.

Comparative B Films of Block Copolymer Having Relatively Short Endblock Length

A dispersion of a styrene-isoprene-styrene block copolymer was prepared as in Example 1. The triblock copolymer had a $M_w$ of 85,000 Daltons and had a styrene content of 16 weight percent and 15 volume percent. The polystyrene endblock molecular weight was 6800 Daltons. The polyisoprene block molecular weight was 71,000 Daltons. Film samples were prepared by deposition onto glass and annealed at 80°C, as in Example 1. Results are contained in Table III.

Table III

| Strength as a Function of Annealing Time | | | | |
|---|---|---|---|---|
| minutes | 0 | 4 | 16 | 120 |
| Tensile Strength at Break (MPa) | 1.4 | 5.0 | 6.7 | 7.5 |

By comparison with the results of Table I, it may be seen that relatively short endblock vinyl aromatic Dolymer iength gives block copolymers having rapid annealing times, but tensile strength properties may be reduced. By controlling the length of the monovinylidene aromatic block, it is possible to maximize the tensile strength of tre block copolymer and minimize the annealing time and temperature requirements.

Example 2 Films of Radial Block Copolymer

A dispersion of a four-armed styrene-isoprene block copolymer coupled with silicon tetrachloride was prepared as in Example 1. The polymer had an apparent molecular weight by gel permeation chromatography (GPC) of 227,000 Daltons. The styrene content was 15 weight percent, 13.2 volume percent. The polystyrene endblock weight average molecular weight was 11,300 Daltons. The polyisoprene radial block apparent weight average molecular weight was 182,000 Daltons. Film samples were prepared by deposition onto glass and annealed and tested as in Example 1. Results are combined in Table IV.

Table IV

| Strength as a Function of Annealing Time | | | | |
|---|---|---|---|---|
| minutes | 0 | 4 | 16 | 60 |
| Tensile Strength at Break (MPa) | 1.4 | 14.9 | 19.1 | 21.0 |

Example 3 Films of a Tapered Block Copolymer

Films of a symmetrically tapered styrene-isoprene-styrene block copolymer containing 26 weight percent styrene, an overall molecular weight ($M_w$) of 228,000 Daltons, a measured isolated styrene is 52 percent and effective phase volume styrene content of approximately 11 percent were prepared as in Example 1. The polystyrene endblock molecular weight was measured by degradation analysis and GPC to be 9700 Daltons. Films were cast on glass slides, dried at room temperature and annealed as in Example 1. Strength properties were tested according to ASTM-D-412 after annealing at 80°C and at various temperatures. Results are contained in Tables VA and VB.

Table VA

| Strength as a Function of Annealing Time | | | | |
|---|---|---|---|---|
| minutes | 0 | 4 | 16 | 30 |
| Tensile Strength at Break (MPa) | 0.5 | 4.8 | 11.8 | 13.1 |

Table VB

| Strength as a Function of Annealing Temperature-Time | | | | | | | | |
|---|---|---|---|---|---|---|---|---|
| Temp.(°C) | 60 | 60 | 70 | 70 | 80 | 80 | 90 | 90 |
| Time (min.) | 4 | 30 | 4 | 30 | 4 | 30 | 4 | 30 |
| Tensile Strength at Break (MPa) | 1.1 | 2.9 | 2.0 | 5.3 | 4.8 | 13.1 | 10.6 | 18.1 |

Comparative C Films of a Triblock Copolymer Having Too Large Polystyrene Content

Dispersions were prepared from a toluene solution of a styrene/butadiene/styrene triblock copolymer. The polymer weight average molecular weight was approximately 100,000 Daltons. The polystyrene content was 30 weight percent, 29 volume percent. The polystyrene endblock molecular weight was 15,000 Daltons. The polybutadiene block molecular weight was 70,000 Daltons. When cast onto a clean glass plate according to Example 1, severe cracking of the film occurred. No coherent film could be formed at room temperature.

Comparative D

A dispersion was prepared from a cyclohexane solution of Kraton™ 1111 styrene-isoprene-styrene block copolymer containing nominally 22.7 percent styrene having a molecular weight of 147,000 and styrene endblock length of 16,700. The film was annealed at 80°C for various times, the results are compiled in Table VI.

Table VI

| Time at 80°C (min.) | 0 | 4 | 16 | 60 |
|---|---|---|---|---|
| TS at Break (MPa) | 0.35 | 1.90 | 4.96 | 11.6 |

Example 4

To a cyclohexane solution of the block copolymer described in Comparative C was added 44 percent by weight based on the block copolymer of an aliphatic mineral oil. This blend was dispersed in water as described in Example 1 and the cyclohexane was removed by distillation. The styrene phase volume in the hydrocarbon phase was calculated to be 19 percent based on the assumption that all of the mineral oil is contained in the butadiene phase. The dispersion was cast on a clean glass plate which, upon drying, left a coherent film. The film was annealed in a forced-air oven at 80°C. Samples were tested for tensile strength after varied annealing times. The results are compiled in Table VII.

Table VII

| Time at 80°C (min.) | 4 | 16 | 30 | 60 |
|---|---|---|---|---|
| Tensile Srength (MPa) | 1.7 | 10.1 | 11.6 | 11.7 |

Example 5

A dispersion was made from a cyclohexane solution containing 35 percent by weight of a styrene-isoprene-styrene block copolymer containing 18 percent by weight polystyrene (15.9 volume percent) with the structure polystyrene-polyisoprene-polystyrene being 10,000-110,000-10,000. This solution was dispersed into water using Alipal™ CO-436 surfactant at a level of 3.0 percent by weight based on polymer solids. After the dispersion was formed, the solvent was removed under vacuum to give a dispersion that was 59 percent by weight solids. Films were cast onto glass plates in two layers and dried 2-16 hours at room temperature to provide a dried film thickness of approximately 25 mm. These films were cut into samples, annealed at 80°C for various times and tested according to ASTM-D-412. The results are compiled in Table VIII.

Table VIII

| Annealing Time at 80°C (min.) | 0 | 2 | 8 | 16 |
|---|---|---|---|---|
| TS at break (MPa) | .57 | 3.23 | 11.5 | 13.5 |

Example 6

A dispersion of styrene-isoprene-styrene block copolymers was prepared as in Example 1. Polymer A was 14 percent styrene (12.4 volume percent styrene) with a structure polystyrene-polyisoprene-polystyrene of 9500-109,000-9500. Polymer B was 15 percent styrene (13.2 volume percent styrene) with a structure polystyrene-polyisoprene-polystyrene of 15,300-154,400-15,300. Film samples were prepared on glass and annealed as described in Example 1. The results are compiled in Table IXA.

Table IXA

| Annealing Time at 80°C (min.) | 0 | 2 | 8 | 16 |
|---|---|---|---|---|
| Sample A | .90 | 16.9 | 20.2 | 20.3 |
| Sample B | .21 | -- | .81 | 1.55 |

Sample A was annealed at temperatures below 70°C. Strength after 4 and 16 minutes was noted. The results are compiled in Table IXB

Table IXB

| Temperature | 70 | 60 | 55 | 50 | 40 |
|---|---|---|---|---|---|
| Strength 4 min. | 17.2 | 7.8 | 6.9 | 4.1 | 1.86 |
| Strength 16 min. | 18.8 | 18.1 | 19.9 | 9.9 | 3.7 |

Example 7

A dispersion was prepared from a cyclohexane solution of a styrene-butadiene-styrene triblock copolymer containing 17 weight percent styrene having a molecular weight of 145,000. This corresponds to 16.5 volume percent styrene. The molecular weight of the polystyrene endblocks was 12,300. After drying at room temperature, samples of the film were annealed in a forced-air oven at 80°C for various times. The results are compiled in Table X.

Table X

| Time at 80°C (min.) | 4 | 16 | 60 | 300 |
|---|---|---|---|---|
| Strength (MPa) | 3.4 | 11.7 | 12.0 | 21.2 |

Example 8

Dispersions were prepared from both toluene and cyclohexane solutions of a styrene-isoprene-styrene triblock copolymer containing 15 weight percent styrene. This corresponds to 13.2 volume percent styrene. After drying at room temperature, samples were annealed in a forced-air oven at 80°C for various times. This snows that either aliphatic or aromatic solvents may be used to prepare dispersions whicn anneal to high strengths. The results are compiled in Table XI.

Table XI

| Time at 80°C | 2 | 8 | 30 | 60 |
|---|---|---|---|---|
| Toluene | 12.9 | 18.3 | 20.5 | 21.1 |
| Cyclohexane | 8.0 | 13.2 | 17.9 | 19.9 |

## Claims

1. An aqueous dispersion which is capable of forming a coherent, elastomeric, solid film which, after drying and annealing at 80°C for 30 minutes, demonstrates a tensile strength at break of 11.0 MPa or greater as determined according to ASTM-D-412-80 wherein the dispersion comprises:

    a. one or more block copolymer(s) corresponding to one of the formulas:

$$A-B-X_m-(B-A)_n \text{ or } ABA$$

    wherein each A is a polymer block consisting essentially of a monovinylidene aromatic monomer and, optionally, a conjugated diene, each B is a polymer block consisting essentially of a conjugated diene, X is the remnant of a multifunctional coupling agent, m is 0 or 1, and n is an integer from 1 to 5, each monovinylidene aromatic monomer block having a weight average molecular weight from 8,000 to 15,000 Daltons, each conjugated diene block having a weight average molecular weight from 40,000 to 240,000 Daltons.
    b. water,
    c. optionally, a diluent for the block copolymer which is soluble in the B block or forms a single phase with the B block when the diluent is mixed with one or more block copolymers,
    d. a surfactant in sufficient amount to emulsify (a) and (c) in water and such that a film formed from the emulsion exhibits the required properties;

    wherein the average A content of the hydrocarbon phase is from 5 to 25 percent by weight and the effective phase volume of the A block in the hydrocarbon phase is from 10 to 19 percent wherein the amount of the optional diluent present is sufficient to achieve the desired effective phase volume of the A block and the required film properties and is at least 1 percent by weight of the hydrocarbon phase.

2. A dispersion according to Claim 1 which comprises:

    a. one or more block copolymers,
    b. water,
    c. a diluent comprising a naphthenic or hydrocarbon oil or a polymer, and

d. a surfactant.

3. A dispersion according to Claim 1, which comprises two or more block copolymers, water and a surfactant wherein the average A block content of the two or more block copolymers is from 5 to 25 percent by weight.

4. A dispersion according to any one of the preceding Claims, wherein the surfactant is present in an amount of from 0.5 to 10 percent by weight.

5. A dispersion according to any one of the preceding Claims wherein the monovinylidene aromatic monomer is styrene and the conjugated diene is 1,3-butadiene or isoprene.

6. A dispersion according to any one of the preceding Claims, wherein the effective phase volume of the monovinylidene aromatic polymer blocks is from 12 to 18 percent.

7. A dispersion according to any one of the preceding Claims, wherein the weight average molecular weight of the one or more block copolymers is from 60,000 to 240,000 Daltons.

8. A dispersion according to any one of the preceding Claims, wherein the surfactant is $C_{12-30}$ carboxylic acid or salt thereof having an HLB of 15 or greater.

9. A process for preparing a film which comprises:

   i. forming an aqueous dispersion according to Claim 1,
   ii. depositing a coating of the aqueous dispersion on a surface and drying the coating to form a film, and
   iii. annealing the film under conditions such that the film exhibits a tensile strength at break of 11.0 MPa or greater as determined according to ASTM-D-412-80.

10. A process according to Claim 9, wherein the film is annealed at 30 to 120°C for 1 to 60 minutes.

11. A process according to Claim 9 or Claim 10 wherein the surfactant is present in an amount of from 0.5 to 10 percent by weight.

12. A film prepared according to the process of any one of Claims 9 to 11, wherein the film exhibits a tensile strength at break of 11.0 MPa or greater as determined according to ASTM-D-412-80 when annealed at 80°C for 30 minutes.

13. A coherent, elastomeric, solid film comprising:

   a. one or more block copolymer(s) corresponding to one of the formulas:

$$A\text{-}B\text{-}X_m\text{-}(B\text{-}A)_n \text{ or } ABA$$

   wherein each A is a polymer block consisting essentially of a monovinylidene aromatic monomer and, optionally, a conjugated diene, each B is a polymer block consisting essentially of a conjugated diene, X is the remnant of a multifunctional coupling agent, m is 0 or 1, and n is an integer from 1 to 5, each monovinylidene aromatic monomer block having a weight average molecular weight from 8,000 to 15,000 Daltons, each conjugated diene block having a weight average molecular weight from 40,000 to 240,000 Daltons.
   b. optionally, a diluent for the block copolymer which is soluble in the B block or forms a single phase with the B block when the diluent is mixed with one or more block copolymers, and
   c. the residue of a surfactant capable of emulsifying components (a) and (b) in water;

   wherein the A block comprises 5 to 25 percent by weight of the hydrocarbon phase and exhibits an effective phase volume in the hydrocarbon phase from 10 to 19 percent and the amount of diluent present is sufficient to achieve the desired effective phase volume of the A block and is at least 1 percent by weight of the hydrocarbon phase, wherein the film demonstrates a tensile strength at break of 11.0 MPa or greater as determined according to ASTM-D-412-80 when annealed at 80°C for 30 minutes.

14. A film according to Claim 12 or Claim 13 comprising:

a. one or more block copolymers,
b. a diluent comprising a naphthenic or hydrocarbon oil or a polymer, and
c. a surfactant.

**15.** A film according to Claim 12 or Claim 13 which comprises two or more block copolymers and a residue of the surfactant wherein the average A block content of the two or more block copolymers is from 5 to 25 percent by weight.

**16.** A film according to any one of Claims 12 to 15 wherein the surfactant is present in an amount of from 0.5 to 10 percent by weight.


## Patentansprüche

**1.** Wässrige Dispersion, die zur Bildung eine kohärenten elastomeren festen Folie fähig ist, die nach Trocknen und Anlassen bei 80° C für 30 Minuten eine Reißfestigkeit von 11,0 MPa oder größer, bestimmt nach der Norm ASTM-D-412-80, zeigt, worin die Dispersion umfaßt:

a. ein oder mehrere Blockcopolymere entsprechend einer der Formeln:

$$A\text{-}B\text{-}X_m\text{-}(B\text{-}A)_n \qquad oder \qquad ABA$$

worin jedes A ein Polymerblock ist, bestehend im wesentlichen aus einem monovinylidenaromatischen Monomeren und wahlweise einem konjugierten Dien, jedes B ein Polymerblock ist, bestehend im wesentlichen aus einem konjugierten Dien, X der verbliebene Teil eines multifunktionellen Kupplungsmittels ist, m = 0 oder 1 ist und n eine ganze Zahl von 1 bis 5 ist, jeder monovinylidenaromatische Monomerenblock ein Gewichtsdurchschnittsmolekulargewicht von 8.000 bis 15.000 Daltons besitzt, jeder konjugierte Dienblock ein Gewichtsdurchschnittsmolekulargewicht von 40.000 bis 240.000 Daltons besitzt,
b. Wasser,
c. wahlweise ein Verdünnungsmittel für das Blockcopolymere, das in dem B-Block löslich ist oder eine einzelne Phase mit dem B-Block bildet, wenn das Verdünnungsmittel mit einem oder mehreren Blockcopolymeren gemischt wird,
d. ein Tensid in ausreichender Menge zum Emulgieren (a) und (c) in Wasser und derart, daß eine aus der Emulsion gebildete Folie die gewünschten Eigenschaften aufweist,

worin der durchschnittliche A-Gehalt der Kohlenwasserstoffphase von 5 bis 25 Gew.-% beträgt und das effektive Phasenvolumen des A-Blocks in der Kohlenwasserstoffphase von 10 bis 19 % beträgt, worin die Menge des vorliegenden wahlweisen Verdünnungsmittels ausreicht, um das gewünschte effektive Phasenvolumen des A-Blocks und die gewünschten Folieneigenschaften zu erreichen, und wenigstens 1 Gew.-% der Kohlenwasserstoffphase beträgt.

**2.** Dispersion nach Anspruch 1, welche umfaßt:

a. ein oder mehrere Blockcoplymere,
b. Wasser
c. ein Verdünnungsmittel, umfassend ein Naphthenöl oder Kohlenwasserstofföl oder ein Polymeres, und
d. ein Tensid.

**3.** Dispersion nach Anspruch 1, welche zwei oder mehrere Blockcoplymere, Wasser und ein Tensid umfaßt, worin der durchschnittliche A-Blockgehalt der zwei oder mehreren Blockcopolymere von 5 bis 25 Gew.-% beträgt.

**4.** Dispersion nach einem der vorhergehenden Ansprüche, worin das Tensid in einer Menge von 0,5 bis 10 Gew.-% vorliegt.

**5.** Dispersion nach einem der vorhergehenden Ansprüche, worin das monovinylidenaromatische Monomere Styrol ist und das konjugierte Dien 1,3-Butadien oder Isopren ist.

6. Dispersion nach einem der vorhergehenden Ansprüche, worin das effektive Phasenvolumen des monovinylidenaromatischen Polymerblocks von 12 bis 18 % beträgt.

7. Dispersion nach einem der vorhergehenden Ansprüche, worin das Gewichtsdurchschnittsmolekulargewicht des einen oder der mehreren Blockcopolymere von 60.000 bis 240.000 Daltons beträgt.

8. Dispersion nach einem der vorhergehenden Ansprüche, worin das Tensid $C_{12\text{-}30}$-Carbonsäure oder Salz hiervon mit einem HLB-Wert von 15 oder größer ist.

9. Verfahren zur Herstellung einer Folie, welches umfaßt:

   i. Bildung einer wässrigen Dispersion entsprechend Anspruch 1,
   ii. Ablagern eines Überzuges der wässrigen Dispersion auf einer Oberfläche und Trocknen des Überzuges zur Bildung einer Folie, und
   iii. Anlassen der Folie unter solchen Bedingungen, daß die Folie eine Reißfestigkeit von 11,0 MPa oder größer, bestimmt nach der Norm ASTM-D-412-80, zeigt.

10. Verfahren nach Anspruch 9, worin die Folie bei 30 bis 120° C für 1 bis 60 Minuten angelassen wird.

11. Verfahren nach Anspruch 9 oder Anspruch 10, worin das Tensid in einer Menge von 0.5 bis 10 Gew.-% vorliegt.

12. Folie, hergestellt nach dem Verfahren eines der Ansprüche 9 bis 11, worin die Folie eine Reißfestigkeit von 11,0 MPa oder größer, bestimmt nach der Norm ASTM-D-412-80, nach dem Anlassen bei 80° C für 30 Minuten zeigt.

13. Kohärente elastomere feste Folie, umfassend:

   a. ein oder mehrere Blockcopolymere entsprechend einer der Formeln:

$$A\text{-}B\text{-}X_m\text{-}(B\text{-}A)_n \qquad \text{oder} \qquad ABA$$

   worin jedes A ein Polymerblock ist, bestehend im wesentlichen aus einem monovinylidenaromatischen Monomeren und wahlweise einem konjugierten Dien, jedes B ein Polymerblock ist, bestehend im wesentlichen aus einem konjugierten Dien, X der verbliebene Teil eines multifunktionellen Kupplungsmittels ist, m = 0 oder 1 ist und n eine ganze Zahl von 1 bis 5 ist, jeder monovinylidenaromatische Monomerenblock ein Gewichtsdurchschnittsmolekulargewicht von 8.000 bis 15.000 Daltons besitzt, jeder konjugierte Dienblock ein Gewichtsdurchschnittsmolekulargewicht von 40.000 bis 240.000 Daltons besitzt,
   b. wahlweise ein Verdünnungsmittel für das Blockcopolymere, das in dem B-Block löslich ist oder eine einzelne Phase mit dem B-Block bildet, wenn das Verdünnungsmittel mit einem oder mehreren Blockcopolymeren gemischt wird,
   c. den Rückstand eines Tensids, das zum Emulgieren der Komponenten (a) und (c) in Wasser fähig ist,

   worin der A-Block 5 bis 25 Gew.-% der Kohlenwasserstoffphase umfaßt und ein effektive Phasenvolumen in der Kohlenwasserstoffphase von 10 bis 19 % aufweist und die Menge des vorliegenden Verdünnungsmittels ausreicht, um das gewünschte effektive Phasenvolumen des A-Blocks zu erreichen und wenigstens 1 Gew.-% der Kohlenwasserstoffphase beträgt, worin die Folie eine Reißfestigkeit von 11,0 MPa oder größer, bestimmt nach der Norm ASTM-D-412-80, nach dem Anlassen bei 80° C für 30 Minuten zeigt.

14. Folie nach Anspruch 12 oder Anspruch 13, umfassend:

   a. ein oder mehrere Blockcoplymere,
   b. ein Verdünnungsmittel, umfassend ein Naphthenöl oder Kohlenwasserstofföl oder ein Polymeres, und
   c. ein Tensid.

15. Folie nach Anspruch 12 oder Anspruch 13, umfassend zwei oder mehrere Blockcoplymere und einen Rückstand des Tensids, worin der durchschnittliche A-Blockgehalt der zwei oder mehreren Blockcopolymere von 5 bis 25 Gew.-% beträgt.

**16.** Folie nach einem der Ansprüche 12 bis 15, worin das Tensid in einer Menge von 0,5 bis 10 Gew.-% vorliegt.

**Revendications**

**1.** Dispersion aqueuse capable de former un film solide élastomère cohérent qui, après séchage et recuit à 80°C pendant 30 minutes, présente une résistance à la rupture par traction, déterminée selon la norme ASTM-D-412-80, supérieure ou égale à 11,0 MPa, ladite dispersion comprenant :

   **a.** un ou plusieurs copolymères à blocs, correspondant à l'une des formules :

$$A\text{-}B\text{-}X_m\text{-}(B\text{-}A)_n \text{ et } ABA$$

   dans lesquelles chaque A représente un bloc polymère constitué essentiellement d'un monomère aromatique monovinylidène et, éventuellement, d'un diène conjugué, chaque B représente un bloc polymère constitué essentiellement d'un diène conjugué, X représente le reste d'un agent de couplage polyfonctionnel, m est égal à 0 ou 1, et n désigne un nombre entier ayant une valeur de 1 à 5, chaque bloc de monomère aromatique monovinylidène ayant une masse moléculaire moyenne en poids de 8.000 à 15.000 Daltons et chaque bloc de diène conjugué ayant une masse moléculaire moyenne en poids de 40.000 à 240.000 Daltons,
   **b.** de l'eau,
   **c.** éventuellement un diluant pour le copolymère à blocs, diluant qui est soluble dans le bloc B ou forme une phase unique avec le bloc B lorsqu'il est mélangé avec un ou plusieurs copolymères à blocs,
   **d.** un tensio-actif qui est présent en une quantité suffisante pour émulsifier (a) et (c) dans l'eau et telle que le film formé à partir de l'émulsion présente les propriétés requises,

   la teneur moyenne en A de la phase hydrocarbonée étant de 5 à 25% en poids et le volume réel de phase du bloc A dans la phase hydrocarbonée représentant 10 à 19%, la quantité du diluant éventuel présent étant suffisante pour que soient obtenus le volume réel de phase souhaité du bloc A et les propriétés requises pour le film, et étant d'au moins 1% en poids de la phase hydrocarbonée.

**2.** Dispersion selon la revendication 1, qui comprend :

   **a.** un ou plusieurs copolymères à blocs,
   **b.** de l'eau,
   **c.** un diluant renfermant une huile naphténique, une huile hydrocarbonée ou un polymère, et
   **d.** un tensio-actif.

**3.** Dispersion selon la revendication 1, qui comprend deux ou plus de deux copolymères à blocs, de l'eau et un tensio-actif, la teneur moyenne en bloc A des deux ou plus de deux copolymères à blocs étant de 5 à 25% en poids.

**4.** Dispersion selon l'une quelconque des revendications précédentes, dans laquelle le tensio-actif est présent en une proportion de 0,5 à 10% en poids.

**5.** Dispersion selon l'une quelconque des revendications précédentes, dans laquelle le monomère aromatique monovinylidène est le styrène et le diène conjugué est le 1,3-butadiène ou l'isoprène.

**6.** Dispersion selon l'une quelconque des revendications précédentes, dans laquelle le volume réel de phase des blocs de polymère aromatique monovinylidène est de 12 à 18%.

**7.** Dispersion selon l'une quelconque des revendications précédentes, pour laquelle la masse moléculaire moyenne en poids du ou des copolymères à blocs est de 60.000 à 240.000 Daltons.

**8.** Dispersion selon l'une quelconque des revendications précédentes, dans laquelle le tensio-actif est un acide carboxylique en $C_{12}$ à $C_{30}$ ou un sel d'un tel acide, ayant une valeur BHL de 15 ou plus.

**9.** Procédé de préparation d'un film, qui comprend les étapes consistant à:

i. préparer une dispersion aqueuse conforme à la revendication 1,

ii. déposer sur une surface un revêtement constitué de la dispersion aqueuse et sécher le revêtement pour former un film, et

iii. soumettre le film à un recuit dans des conditions telles que le film présente une résistance à la rupture par traction, déterminée selon la norme ASTM-D-412-80, supérieure ou égale à 11,0 MPa.

10. Procédé selon la revendication 9, dans lequel le film est recuit à une température de 30 à 120°C pendant 1 à 60 minutes.

11. Procédé selon la revendication 9 ou 10, dans lequel le tensio-actif est présent en une proportion de 0,5 à 10% en poids.

12. Film préparé par le procédé selon l'une quelconque des revendications 9 à 11, qui présente une résistance à la rupture par traction, déterminée selon la norme ASTM-D-412-80, supérieure ou égale à 11,0 MPa, après un recuit à 80°C pendant 30 minutes.

13. Film solide élastomère cohérent, qui comprend :

**a.** un ou plusieurs copolymères à blocs, correspondant à l'une des formules :

$$\text{A-B-X}_m\text{-(B-A)}_n \text{ et ABA}$$

dans lesquelles chaque A représente un bloc polymère constitué essentiellement d'un monomère aromatique monovinylidène et, éventuellement, d'un diène conjugué, chaque B représente un bloc polymère constitué essentiellement d'un diène conjugué, X représente le reste d'un agent de couplage polyfonctionnel, m est égal à 0 ou 1, et n désigne un nombre entier ayant une valeur de 1 à 5, chaque bloc de monomère aromatique monovinylidène ayant une masse moléculaire moyenne en poids de 8.000 à 15.000 Daltons et chaque bloc de diène conjugué ayant une masse moléculaire moyenne en poids de 40.000 à 240.000 Daltons,

**b.** éventuellement un diluant pour le copolymère à blocs, diluant qui est soluble dans le bloc B ou forme une phase unique avec le bloc B lorsqu'il est mélangé avec un ou plusieurs copolymères à blocs, et

**c.** le résidu d'un tensio-actif capable d'émulsifier les constituants (a) et (b) dans l'eau,

le bloc A représentant 5 à 25% en poids de la phase hydrocarbonée et présentant un volume réel de phase dans la phase hydrocarbonée de 10 à 19%, et la quantité de diluant présente étant suffisante pour l'obtention du volume réel de phase souhaité du bloc A et étant égale à au moins 1% en poids de la phase hydrocarbonée, ledit film présentant une résistance à la rupture par traction, déterminée selon la norme ASTM-D-412-80, supérieure ou égale à 11,0 MPa, après un recuit à 80°C pendant 30 minutes.

14. Film selon la revendication 12 ou 13, qui comprend :

**a.** un ou plusieurs copolymères à blocs,

**b.** un diluant renfermant une huile naphténique, une huile hydrocarbonée ou un polymère, et

**c.** un tensio-actif.

15. Film selon la revendication 12 ou 13, qui comprend deux ou plus de deux copolymères à blocs et un résidu de tensio-actif, la teneur moyenne en bloc A des deux ou plus de deux copolymères à blocs étant de 5 à 25% en poids.

16. Film selon l'une quelconque des revendications 12 à 15, dans lequel le tensio-actif est présent en une proportion de 0,5 à 10% en poids.